Europäisches Patentamt

European Patent Office

Office européen des brevets

(19)

(11) Veröffentlichungsnummer : **0 372 200 B1**

## (12) EUROPÄISCHE PATENTSCHRIFT

(45) Veröffentlichungstag der Patentschrift :
**26.02.92 Patentblatt 92/09**

(51) Int. Cl.⁵ : **F16B 13/14, E04B 1/64,
E21D 21/00**

(21) Anmeldenummer : **89119118.1**

(22) Anmeldetag : **14.10.89**

(54) **Injektionsadapter mit einem Befestigungselement und Verfahren zum Anbringen eines Korrosionsschutzes.**

(30) Priorität : **09.12.88 DE 3841577**

(43) Veröffentlichungstag der Anmeldung :
**13.06.90 Patentblatt 90/24**

(45) Bekanntmachung des Hinweises auf die
Patenterteilung :
**26.02.92 Patentblatt 92/09**

(84) Benannte Vertragsstaaten :
**AT BE CH DE ES FR GB IT LI NL**

(56) Entgegenhaltungen :
**EP-A- 0 056 255
AU-B- 415 425
BE-A- 787 445
DE-A- 3 538 995
DE-A- 3 622 082**

(73) Patentinhaber : **fischerwerke Artur Fischer
GmbH & Co. KG
Weinhalde 14 - 18
W-7244 Waldachtal 3/Tumlingen (DE)**

(72) Erfinder : **Haug, Willi
Märzenbergstrasse 37
W-7290 Freudenstadt (DE)**

(74) Vertreter : **Ott, Elmar, Dipl.-Ing.
fischerwerke Artur Fischer GmbH & Co KG
Weinhalde 14-18
W-7244 Waldachtal 3/Tumlingen (DE)**

## Beschreibung

Die Erfindung betrifft einen Injektionsadapter mit einem Befestigungselement zum Einbringen einer fließfähigen Masse gemäß der Gattung des Hauptanspruchs und ein Verfahren zum Anbringen eines Korrosionsschutzes bei einem in ein Bohrloch eines Mauerwerks eingesetzten Spreizdübel, unter Verwendung des Injektionsadapters.

Es sind Befestigungselemente bekannt, die als metallische Spreizanker ausgebildet sind und in Bohrlöchern mit Hinterschneidung formschlüssig eingesetzt werden können. Mit diesen Befestigungselementen können äußerst sichere Befestigungen in Beton oder dergleichen hergestellt werden, wobei sehr hohe Auszugskräfte erreicht werden. Für spezielle Anwendungen kann es erforderlich sein, daß die metallischen Befestigungselemente mit einem Korrosionsschutz versehen werden, wozu eine zähflüssige Dichtungsmasse verwendet werden kann.

Aus der DE-A 35 38 995 ist ein Korrosionsschutz für ein derartiges Befestigungselement bekannt. Die Dichtungsmasse wird dort zunächst in das Bohrloch eingebracht. Dann wird der metallische Spreizdübel in das Bohrloch eingesetzt, wobei die Dichtungsmasse verdrängt wird, so daß diese in Richtung Bohrlochmündung aufsteigt. Die Menge des Korrosionsschutzmittels muß dabei so ausreichend bemessen sein, daß dieses auch bis zur Bohrlochmündung aufsteigen kann. Die im Inneren des Befestigungselements befindlichen Hohlräume lassen sich mit dieser bekannten Methode nicht sicher mit Korrosionsschutzmittel ausfüllen.

Der Erfindung liegt die Aufgabe zugrunde, einen Injektionsadapter mit einem Befestigungselement zu schaffen, der das Einbringen eines Korrosionsschutzmittels in und um ein Befestigungselement, welches in ein Bohrloch eines Mauerwerks eingesetzt ist, gewährleistet.

Die Lösung dieser Aufgabe wird durch die im Anspruch 1 angegebenen Merkmale erhalten. Der Injektionsadapter übergreift den Gewindebolzen des Befestigungselementes und schließt gegenüber der Stirnseite der Hülse des Befestigungselements dicht ab. Wird nun als fließfähige Masse ein Korrosionsschutzmittel in den Injektionsadapter gepreßt, so fließt das Korrosionsschutzmittel zwischen Gewindebolzen und der Hülse in das Befestigungselement, bis es unten an seinem Spreizteil wieder austritt und an der Außenseite der Hülse im Bohrloch bis zur Bohrlochmündung aufsteigt. Dadurch wird gewährleistet, daß das Befestigungselement innen und außen vollständig mit Korrosionsschutzmittel umhüllt ist, wodurch ein optimaler Korrosionsschutz entsteht. Das Korrosionsschutzmittel läßt sich mittels einer Fettpresse oder dergleichen über einen Schmiernippel in den Druckraum des Injektionsadapters pressen.

Der Injektionsadapter wird vorzugsweise auf den Gewindebolzen des Befestigungselements aufgeschraubt bis er an der Stirnseite der Hülse dicht anliegt. Nach dem Einbringen des Korrosionsschutzmittels wird der Injektionsadapter wieder abgeschraubt.

Besonders vorteilhaft ist es, wenn am Injektionsadapter ein äußerer Hubzylinder vorgesehen ist, der Dichtblättchen in Richtung Befestigungselement drückt. Jeweils das unterste Dichtblättchen liegt beim Einbringen des Korrosionsschutzmittels an der Wandoberfläche an, so daß das im Bohrloch aufsteigende Korrosionsschutzmittel unter diesem Dichtblättchen herausgedrückt wird. Das unterste Dichtblättchen bleibt somit beim Abnehmen des Injektionsadapters an der Wandoberfläche haften, wodurch an der Bohrlochmündung ein sauberer Abschluß erhalten wird.

Weiterhin können am Innengewinde des Injektionsadapters oder am Gewinde des Gewindebolzens Längskanäle als Überströmkanäle ausgebildet sein, damit das Korrosionsschutzmittel problemlos zwischen Hülse und Gewindebolzen eindringen kann.

Der Schmiernippel ist vorzugsweise für einen Druck von mehr als 150 bar ausgelegt, damit die Dichtmasse bzw. das Korrosionsschutzmittel auch in enge Hohlräume des Befestigungselements mit hohem Druck hineingepreßt werden kann.

Der Injektionsadapter wird vorzugsweise für metallische Spreizdübel verwendet, deren Gewindebolzen einen angeformten Spreizkonus aufweisen, der in einem aufspreizbaren Teil der als Spreizhülse ausgebildeten Hülse eingreift.

Mit dem Injektionsadapter läßt sich ein Verfahren zum Anbringen eines Korrosionsschutzes bei Spreizdübeln durchführen, bei dem eine fließfähige Masse, die als Korrosionsschutz dient, über den Schmiernippel in den Druckraum des Injektionsadapters gelangt und von dort innerhalb der Hülse des Befestigungselements bis zum Bohrlochgrund und von dort außerhalb der Hülse bis zur Bohrlochöffnung gelangt. Dadurch werden sämtlich Hohlräume mit der Dichtmasse überzogen, wodurch ein optimaler Korrosionsschutz entsteht. Sobald die Dichtmasse an der Bohrlochöffnung gleichmäßig austritt, kann das Einbringen des Korrosionsschutzmittels beendet werden.

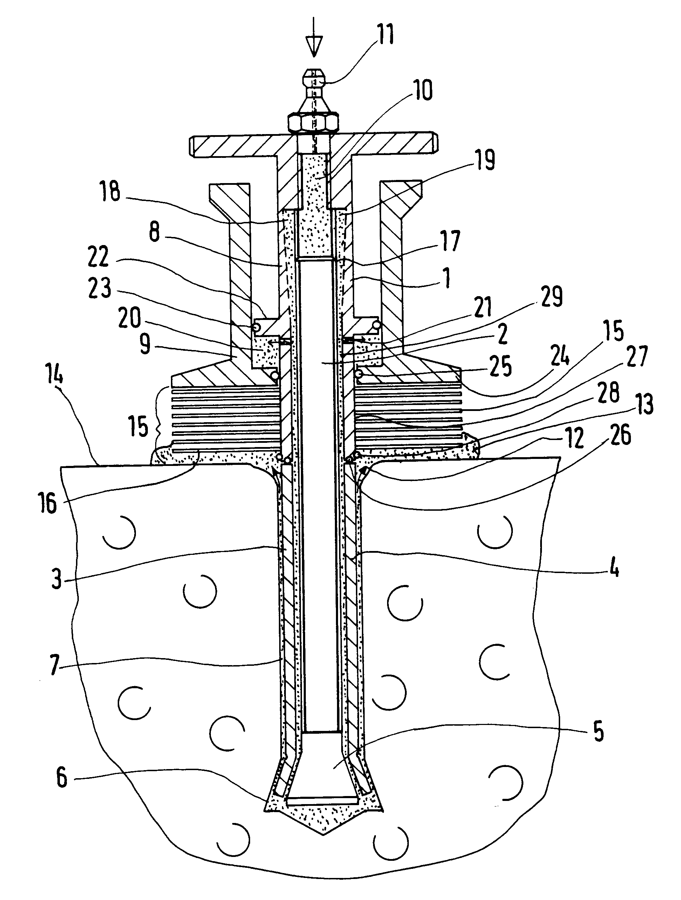

Die Erfindung wird nachfolgend anhand der Zeichnung näher erläutert.

Die Zeichnung zeigt einen Injektionsadapter mit einem in einem Bohrloch eines Mauerwerks verankerten metallischen Spreizdübel.

Der Injektionsadapter 1 ist auf den Gewindebolzen 2 eines Befestigungselements 3 aufgeschraubt. Das Befestigungselement 3 ist ein metallischer Spreizdübel, der aus dem Gewindebolzen 2 und einer Hülse 4 besteht. Am unteren Ende des Gewindebolzens 2 ist ein Spreizkonus 5 ausgebildet, der die Hülse 4 aufspreizt, so daß diese im unteren Bereich formschlüssig in eine Hinterschneidung 6 des Bohrlochs 7 eingreift.

Der Injektionsadapter 1 besteht aus einem zylindrischen Teil 8 und einem Hubzylinder 9, der auf dem zylindrischen Teil 8 axial verschiebbar angeordnet ist. Das zylindrische Teil 8 umschließt einen inneren Druckraum 10, in den eine Dichtmasse über einen Schmiernippel 11 mittels einer hier nicht dargestellten Presse gepreßt werden kann. Die Dichtmasse fließt während des Pressvorganges gemäß den angegebenen Pfeilen zunächst zwischen Gewindebolzen 2 und Hülse 4 bis zur Hinterschneidung 16 und von dort an der Außenseite der Hülse 4 bis zur Bohrlochöffnung 12, bis die Dichtmasse 13 sichtbar wird.

Während des Pressvorganges wird der Hubzylinder 9 in Richtung Wand 14 gedrückt, so daß ein Stapel 15, der aus einzelnen Dichtblättchen 16 besteht, gegen die Wand 14 gedrückt wird. Das jeweils unterste Dichtblättchen 16 wird mit der Dichtmasse an der Wandoberfläche festgeklebt. Wird nun der Injektionsadapter 1 vom Gewindebolzen 2 wieder abgeschraubt, so bleibt das unterste Dichtblättchen 16 an der Wand haften.

Der Injektionsadapter 1 besitzt ein Innengewinde 17, in das der Gewindebolzen 2 eingreift. Damit die Dichtmasse ungehindert entlang dem Gewindebolzen 2 durch den Spreizdübel gepreßt werden kann, sind im Bereich des Innengewindes 17 zwei gegenüberliegende Überströmkanäle 18,19 ausgebildet. Die Überströmkanäle 18,19 können als schmale Längsnuten ausgeführt sein.

Der Hubzylinder 9 umschließt einen außerhalb des zylindrischen Teils 1 angeordneten Druckraum 20, der über Bohrungen 21 mit dem inneren Druckraum 10 in Verbindung steht. Zur Abdichtung des Druckraumes 20 ist an einem Flansch 22 ein O-Ring 23 und an der stirnseitigen Wandung 24 ein O-Ring 25 angeordnet. Die Stirnseite des zylindrischen Teils 1 besitzt ebenfalls einen Dichtungsring 26, der gegen die Stirnseite der Hülse 4 drückt. Dadurch wird der den Gewindebolzen 2 umschließende Innenraum 29 bis auf die Austrittsöffnungen im Bereich der Hinterschneidung 6 vollständig abgedichtet. Da die Druckräume 10 und 20 über Bohrungen 21 verbunden sind, bewirkt das Einpressen des Korrosionsschutzmittels bzw. einer Dichtmasse über den Schmiernippel 11 in den Druckraum 10, daß auch im Druckraum 20 ein entsprechender Druck aufgebaut wird. Dieser Druck drückt den Hubzylinder 9 nach unten, so daß das jeweils unterste Dichtblättchen 16 gegen die Wandoberfläche gedrückt wird.

Das dargestellte Ausführungsbeispiel besitzt eine Hülse 4 ohne Innengewinde. Es ist jedoch auch möglich, eine Hülse 4 mit Innengewinde zu verwenden, in die von außen ein mit Längnuten versehener Gewindestab eingesetzt wird. Die Längsnuten im Gewindestab dienen dann als Strömungskanäle für das Korrosionsschutzmittel.

Die Dichtblättchen 16 sind dünne Papierblättchen mit einer Öffnung 27, durch die das zylindrische Teil 1 hindurchgreift. Am zylindrischen Teil 1 kann unten ein Gummiring 28 angeordnet sein, der die Dichtblättchen gegen unbeabsichtigtes Abrutschen vom zylindrischen Teil 1 sichert.

## Patentansprüche

1. Injektionsadapter mit einem in ein Bohrloch eines Mauerwerks einsetzbaren Befestigungselement zum Einbringen einer fließfähigen Masse in Hohlräume des Befestigungselements und des Bohrlochs, wobei das Befestigungselement einen in einer Hülse angeordneten, nach außen an der Hülse vorstehenden Gewindebolzen hat, **dadurch gekennzeichnet**, daß der Injektionsadapter den Teil des Gewindebolzens (2), der nach außen an der Hülse (4) hervorsteht, in einem Druckraum (10) aufnimmt, der gegenüber der angrenzenden Stirnseite der Hülse (4) abgedichtet ist und in seiner Wandung einen Schmiernippel (11) hat.

2. Injektionsadapter nach Anspruch 1, **dadurch gekennzeichnet**, daß der Injektionsadapter ein Innengewinde (17) mit Überströmkanal (18,19) hat und auf den Gewindebolzen (2) aufgeschraubt ist, und daß an seiner der Hülse (4) zugewandten Stirnfläche ein Dichtungselement (26) angeordnet ist.

3. Injektionsadapter nach einem der Ansprüche 1 oder 2, **dadurch gekennzeichnet**, daß der Injektionsadapter ein zylindrisches Teil (1) hat, auf das ein Hubzylinder (9) aufgeschoben ist, daß zwischen dem zylindrischen Teil (1) und dem Hubzylinder (9) ein äußerer Druckraum (20) gebildet ist, der über Bohrungen (21) mit dem im zylindrischen Teil (1) befindlichen Druckraum (10) in Verbindung steht, und daß auf das zylindrische Teil (1) ein Stapel (15) von Dichtblättchen (16) aufgesteckt ist, die der Hubzylinder (9) bei vorhandenem Druck im Druckraum (20) in Richtung Befestigungselement drückt.

4. Injektionsadapter nach Anspruch 3, **dadurch gekennzeichnet**, daß am zylindrischen Teil (1) ein Dichtungsflansch (22) absteht, dessen Dichtungselement (23) an der Zylinderinnenwand des Hubzylinders (9) anliegt und den äußeren Druckraum (20) einerseits begrenzt, und daß der äußere Druckraum (20) andererseits von der Stirnwand (24) des Hubzylinders (9) dicht abgeschlossen ist, die eine Durchgangsöffnung für das zylindrische Teil (1) hat.

5. Injektionsadapter nach einem der vorhergehenden Ansprüche, **dadurch gekennzeichnet**, daß am Innengewinde (17) oder am Gewinde des Gewindebolzens (2) Längskanäle als Überströmkanäle (18,19) ausgebildet sind.

6. Injektionsadapter nach einem der vorhergehenden Ansprüche, **dadurch gekennzeichnet**, daß der Schmiernippel (11) für einen Druck von mehr als 150 bar ausgelegt ist.

7. Injektionsadapter nach einem der vorhergehenden Ansprüche, **dadurch gekennzeichnet**, daß das Befestigungselement ein metallischer Spreizdübel ist, dessen Gewindebolzen (2) einen Spreizkonus (5) hat, der in einen aufspreizbaren Teil der als Spreizhülse ausgebildeten Hülse (4) eingreift.

8. Verfahren zum Anbringen eines Korrosionsschutzes bei einem in ein Bohrloch eines Mauerwerks eingesetzten Spreizdübel unter Verwendung eines Injektionsadapter gemäß einem der vorhergehenden Ansprüche, **dadurch gekennzeichnet**, daß als fließfähige Masse eine als Korrosionsschutz dienende Dichtmasse (13) über den Schmiernippel (11) in den Druckraum (10) und von diesem durch das Befestigungselement mit einem Druck von etwa 150 bar gepreßt wird.

9. Verfahren nach Anspruch 8, **dadurch gekennzeichnet**, daß die Dichtmasse (13) so lange eingepreßt wird, bis diese außen am Befestigungselement im Bohrloch (7) aufsteigt und an der Bohrlochmündung (12) austritt.


## Claims

1. An injection adaptor, with a fixing element insertable in a hole drilled in masonry, for introducing a free-flowing compound into cavities of the fixing element and the drilled hole, the fixing element having a threaded bolt arranged in a sleeve and projecting outwards at the sleeve, characterized in that the part of the threaded bolt (2) that projects to the outside at the sleeve (4) is received by the injection adaptor in a pressure chamber (10) which is sealed with respect to the adjacent end face of the sleeve (4) and has in its wall a lubricating nipple (11).

2. An injection adaptor according to claim 1, characterized in that the injection adaptor has an internal thread (17) with flow-over channels (18, 19) and is screwed onto the threaded bolt (2), and at its end face facing the sleeve (4) there is arranged a sealing element (26).

3. An injection adaptor according to one of claims 1 or 2, characterized in that the injection adaptor has a cylindrical part (1) onto which an actuation cylinder (9) is pushed, between the cylindrical part (1) and the actuation cylinder (9) there is formed an outer pressure chamber (20) which is connected <u>via</u> bores (21) to the pressure chamber (10) located in the cylindrical part (1), and on the cylindrical part (1) there is placed a pile (15) of small sealing sheets (16) which is pressed towards the fixing element by the actuation cylinder (9) when the pressure chamber (20) is pressurized.

4. An injection adaptor according to claim 3, characterized in that from the cylindrical part (1) there projects a sealing flange (22), the sealing element (23) of which lies adjacent to the cylinder inner wall of the actuation cylinder (9) and defines the outer pressure chamber (20) at one end, and the outer pressure chamber (20) at its other end is tightly sealed by the end wall (24) of the actuation cylinder (9), which wall has a through-opening for the cylindrical part (1).

5. An injection adaptor according to one of the preceding claims, characterized in that on the internal thread (17) or on the thread of the threaded bolt (2) there are formed longitudinal channels as flow-over channels (18, 19).

6. An injection adaptor according to one of the preceding claims, characterized in that the lubricating nipple (11) is designed for a pressure of more than 150 bars.

7. An injection adaptor according to one of the preceding claims, characterized in that the fixing element is a metal expansible plug, the threaded bolt (2) of which has an expander cone (5) that engages in an expansible part of the sleeve (4) that is constructed as an expansible sleeve.

8. A method for applying a corrosion protective to an expansible plug inserted in a hole drilled masonry, using an injection adaptor according to one of the preceding claims, characterized in that, as free-flowing compound, a sealing compound (13) serving as corrosion protective is forced through the lubricating nipple (11) into the pressure chamber (10) and from this through the fixing element at a pressure of about 150 bars.

9. A method according to claim 8, characterized in that the sealing compound (13) is injected until this rises on the outside of the fixing element in the drilled hole (7) and emerges at the mouth (12) of the drilled hole.

**Revendications**

1. Adaptateur d'injection à organe de fixation encastrable dans un trou d'un mur, destiné à introduire une substance fluide dans les vides et interstices de cet organe de fixation et de ce trou, ledit organe comportant un goujon fileté qui est disposé dans une douille et en fait saillie, adaptateur caractérisé en ce qu'il loge la partie du goujon fileté (2) qui dépasse de la douille (4) dans une chambre (10) de compression isolée hermétiquement de la face d'extrémité adjacente de cette douille (4) et en ce qu'il comporte un graisseur (11) dans sa paroi.

2. Adaptateur d'injection selon la revendication 1, caractérisé en ce qu'il présente un filetage intérieur (17) à canaux (18, 19) de passage et est vissé sur le goujon fileté (2), et en ce qu'un élément d'étanchéité (26) est disposé sur la face d'extrémité adjacente de la douille (4).

3. Adaptateur d'injection selon l'une des revendications 1 et 2, caractérisé en ce qu'il comporte un élément cylindrique (1), sur lequel est glissé un cylindre coulissant (9) ; en ce qu'il est formé, entre cet élément cylindrique (1) et ce cylindre (9), une chambre (20) extérieure de compression,qui communique par des canaux (21) avec une chambre (10) de compression qui se trouve dans cet élément cylindrique (1) ; et en ce qu'il est enfilé sur ledit élément cylindrique (1) une pile (15) de lamelles (16) d'étanchement, que le cylindre (9) repousse vers l'organe de fixation quand il existe une surpression dans la chambre (20) de compression.

4. Adaptateur d'injection selon la revendication 3, caractérisé en ce que l'élément cylindrique (1) comporte une collerette (22) saillante, dont l'élément (23) de joint est appliqué contre la paroi intérieure du cylindre (9) et qui délimite d'un côté la chambre extérieure (20) de compression, et en ce que cette chambre (20) est isolée hermétiquement de l'autre côté, par la paroi frontale (24) de ce cylindre (9), laquelle présente une ouverture de passage de l'élément cylindrique (1).

5. Adaptateur d'injection selon l'une des revendications précédentes, caractérisé en ce que des rainures longitudinales servant de canaux (18, 19) de passage sont formées dans les filets intérieurs (17) ou dans les filets du goujon (2).

6. Adaptateur d'injection selon l'une des revendications précédentes, caractérisé en ce que le graisseur (11) est étalonné à une pression supérieure à 150 bars.

7. Adaptateur d'injection selon l'une revendications précédentes, caractérisé en ce que l'organe de fixation est une cheville expansible métallique, dont le goujon fileté (2) présente un cône dilateur (5) qui s'engage dans une partie expansible de la douille (4).

8. Procédé pour appliquer un inhibiteur de corrosion à une cheville expansible encastrée dans un trou d'un mur, en utilisant un adaptateur d'injection selon, l'une des revendications précédentes, caractérisé en ce qu'une substance fluide (13) d'étanchement, servant d'inhibiteur de corrosion, est injectée sous une pression d'environ 150 bars, par l'entremise du graisseur (11) dans la chambre de compression (10) et, de là, dans l'organe de fixation.

9. Procédé selon la revendication 8, caractérisé en ce que la substance (13) d'étanchement est injectée jusqu'à ce qu'elle remonte dans le trou (7), extérieurement à l'organe de fixation, et ressorte par l'orifice (12) de ce trou (7).